# EUROPÄISCHE PATENTSCHRIFT

(11) **EP 3 489 002 B1**
(45) Veröffentlichungstag und Bekanntmachung des Hinweises auf die Patenterteilung: **26.03.2025**
(21) Anmeldenummer: 18188612.8
(22) Anmeldetag: 13.08.2018
(51) Int. Cl.: B29C 73/16, B60C 19/12

(54) **SELBSTTÄTIG ABDICHTENDES REIFENDICHTMITTEL UND FAHRZEUGLUFTREIFEN ENTHALTEND DAS REIFENDICHTMITTEL**
AUTOMATICALLY SEALING TYRE SEALANT AND PNEUMATIC TYRE FOR A VEHICLE CONTAINING THE SEALANT
AGENT D'ÉTANCHÉITÉ POUR PNEUMATIQUES AUTOMATIQUEMENT ÉTANCHÉIFIANT ET PNEUMATIQUES DE VÉHICULE CONTENANT L'AGENT D'ÉTANCHÉITÉ POUR PNEUMATIQUES

(30) Priorität: 24.11.2017 DE 102017221098
(43) Veröffentlichungstag der Anmeldung: 29.05.2019
(73) Patentinhaber: Continental Reifen Deutschland GmbH, 30175 Hannover (DE)
(72) Erfinder: Cai, Xiaoke, 30165 Hannover (DE); Doroshenko, Mikheil, 30823 Garbsen (DE); Tim Kee, Sherry-Ann, 30167 Hannover (DE); Guardalabene, Joe, 30659 Hannover (DE); Schleer, Nadja, 30451 Hannover (DE)
(74) Vertreter: Continental Corporation

(56) Entgegenhaltungen:
- WO-A1-2010/100155
- WO-A1-2017/105860
- DE-A1- 2 706 212
- DE-C- 954 633
- FR-A1- 2 642 698
- FR-A1- 2 727 978
- US-A1- 2014 221 535
- US-A1- 2015 291 775

## Beschreibung

Die Erfindung betrifft ein selbsttätig abdichtendes Reifendichtmittel und einen Fahrzeugluftreifen enthaltend das Reifendichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

In der WO 2008/141848 A1 ist ein Verfahren zur Herstellung eines Reifendichtmittels offenbart, wobei dieses aus zwei Dichtmittelkomponenten A und B hergestellt wird.

In der DE 102007028932 A1 ist ein Fahrzeugluftreifen offenbart, dessen Dichtmittel auf Basis einer viskosen Mischung auf Basis eines Butylkautschukes und eines Polybutens ausgeführt sein kann.

Die DE954633C offenbart ein Schlauchdichtungsmittel enthaltend Korkmehl, unvulkanisierten Kautschuk, destilliertes Wasser, Gummitragant, Glukose, Gummileim, Frostschutzmittel, flüssigen Weichmacher, Gummiruß und Antigärmittel.

Die US20150291775A1 offenbart ein Reifen-Repair-Kit, welches ein Emulsions-Koagulant aufweist. Die konkret offenbarten Zusammensetzungen enthalten Magnesiumoxid, Silane, Cellulose. Ferner wird eine synthetische Harz-Emulsion und ein Frostschutzmittel offenbart.

Die WO2010100155A1 offenbart ein Polyurethan-Elastomer umfassend ein umweltfreundliches Öl.

Die US20140221535A1 offenbart ein Reifendichtmittel enthaltend 10 bis 40 Gew.-% Wasser, PVA, SDS, Chitosan, Propylen-Glycol in vergleichsweise hohen Mengen (55 bis 65 Gew.-% in Emb 1, 3 und 4 bzw. 30 bis 40 Gew.-% in Emb 2) sowie weitere Substanzen wiebeispielsweise Glycerin.

Die DE2706212A1 offenbart wässrige Gele als Schmierstoffe sowie ein geliertes Polybuten-Dichtmittel-Gemisch enthaltend ein Polybuten und Kautschukkrümel.

Die FR2642698A1 und die FR2727978A1 offenbaren jeweils Zusammensetzungen auf Basis von organischen Lösungsmitteln.

Die WO2017105860A1 offenbart ein Reifendichtmittel enthaltend metallische, elektrisch leitfähige Partikel. Als möglicher Bestandteil werden unter anderem Polybutene allgemein mit aufgeführt.

Bei der Zusammensetzung des Dichtmittels ist jedoch zu beachten, dass es einerseits ein gutes Fließverhalten aufweisen muss, um insbesondere schnell zur Einstichstelle zu gelangen und diese auszufüllen, aber andererseits eine ausreichende Ortsfestigkeit aufweisen muss, damit es nach dem (zufälligen) Entfernen des Einstichobjektes nicht aus der Einstichstelle herausfließt.

Für den ersten Mechanismus ist eine vergleichsweise niedrige Viskosität von Vorteil, während diese für das Herausfließen eher von Nachteil ist.

Der vorliegenden Erfindung liegt daher die Aufgabe zugrunde, ein selbsttätig abdichtendes Reifendichtmittel bereitzustellen, welches hinsichtlich des Zielkonfliktes aus Fließverhalten, insbesondere um unmittelbar eine Einstichstelle zu schließen, und Ortsfestigkeit, insbesondere um nach Entfernen des Objektes nicht aus der Öffnung heraus zu fließen, optimiert ist.

Gelöst wird diese Aufgabe dadurch, dass das Dichtmittel wenigstens einen Füllstoff in Form von Partikeln enthält, die expandierbare und/oder verdichtbare Eigenschaften aufweisen, wobei der Füllstoff wenigstens ein Material umfasst, welches ausgewählt ist aus der Gruppe umfassend a) Materialien mit porösen Strukturen, wie Kork, Ethylen-Vinyl-Acetat (EVA), Polyurethan-Schaum, Polylactid (PLA), Polyvinylalkohol (PVA), Metalllegierungen, wie Cobalt-Chrom, und b) elastische Materialien durch flexible chemische Bindungen, wie Kautschuk, insbesondere recycelter vulkanisierter Kautschuk, und Materialien mit LnN₆-Einheiten und/oder FeC₆-Einheiten, wobei das Reifendichtmittel 50 bis 75 Gew.-% wenigstens eines Polyolefins mit einem Zahlenmittel der Molekulargewichtsverteilung Mn gemäß GPC von 400 bis 2500 g/mol enthält, wobei die Partikelgröße des wenigstens einen Füllstoffs von 10 µm (Mikrometer) bis 10 mm (Millimeter) beträgt und wobei das Reifendichtmittel 0,2 bis 10 Gew.-% des wenigstens einen expandierbaren und/oder verdichtbaren Füllstoffs enthält.

Durch derart flexible Füllstoffe ist das Dichtmittel hinsichtlich dem genannten Zielkonflikt aus Fließverhalten und Ortsfestigkeit optimiert. Je nach voreingestellter Viskosität und passendem expandierbarem und/oder verdichtbarem Füllstoff oder Füllstoffen sind verschiedene Kombinationen von Mechanismen denkbar. Beispielsweise können verdichtbare Füllstoffe durch ihre Kompression dafür sorgen, dass das Dichtmittel das Einstichobjekt im Pannenfall optimal umgibt. Nach Entfernen des Objektes kann dann durch Expansion des oder der Füllstoffe erzielt werden, dass die Viskosität des Dichtmittels lokal in der Einstichstelle erhöht ist und das Dichtmittel somit nicht herausfließt.

Erfindungsgemäß beträgt die Partikelgröße des wenigstens einen Füllstoffs von 10 µm (Mikrometer) bis 10 mm (Millimeter), besonders bevorzugt 0,2 bis 6 mm, ganz besonders bevorzugt 0,2 bis 3 mm und wiederum bevorzugt 0,2 bis 2 mm.

Die Partikelgröße dieser Füllstoffe wird im Rahmen der vorliegenden Erfindung mittels Lichtmikroskopie bestimmt.

Durch die genannten Partikelgrößenbereiche wird ein optimaler Kompromiss aus Fließverhalten und Abdichtung nach Entfernen des Objektes erzielt.

Insbesondere ist in den genannten Größenbereichen eine optimale Auswahl der Partikelgrößeverteilung möglich. Hierbei ist die Partikelgrößeverteilung bevorzugt so zu wählen, dass unterschiedlich große Partikel in signifikanten Mengenanteilen vorhanden sind. Dabei sind dann beispielsweise Partikel am unteren Ende der Partikelgrößeverteilung, wie 10 µm (Mikrometer) oder mehr dazu geeignet, kleinere Einstichstellen abzudichten; während die Partikel ab oberen Ende der Partikelgrößeverteilung dazu geeignet sind, größere Einstichstellen abzudichten.

Bevorzugt weist der wenigstens eine Füllstoff eine Dichte von 40 bis 900 kg/m³, besonders bevorzugt 40 bis 300 kg/m³, ganz besonders bevorzugt 40 bis 200 kg/m³ und wiederum bevorzugt 40 bis 180 kg/m³, auf.

Die Dichteangabe der Füllstoffe bezieht sich auf die Dichte des Füllstoffs, wie er als Rohmaterial dem Dichtmittel zugesetzt wird.

Der wenigstens eine Füllstoff liegt in Form von Partikeln vor, die expandierbare und/oder verdichtbare Eigenschaften aufweisen, wobei der Füllstoff wenigstens ein Material umfasst, welches ausgewählt ist aus der Gruppe umfassend a) Materialien mit porösen Strukturen, wie Kork, Ethylen-Vinyl-Acetat (EVA), Polyurethan-Schaum, Polylactid (PLA), Polyvinylalkohol (PVA), Metalllegierungen, wie Cobalt-Chrom, und b) elastische Materialien durch flexible chemische Bindungen, wie Kautschuk, insbesondere recycelter vulkanisierter Kautschuk, und Materialien mit LnN₆-Einheiten und/oder FeC₆-Einheiten.

Hierbei ist insbesondere auch eine Kombination von wenigstens zwei expandierbaren und/oder verdichtbaren Füllstoffen denkbar, von denen z. B. der erste Füllstoff expandierbar sein kann und der zweite verdichtbar. Ferner ist es denkbar, dass wenigstens einer der Füllstoffe beide Eigenschaften aufweist, was auch im Fall von nur einem Füllstoff bzw. einem Füllstoff-Typ gilt.

Materialien mit porösen und/oder elastischen Strukturen ermöglichen dies.

Insbesondere kann ein Füllstoff zugleich a) poröse Strukturen und b) elastische Anteile aufweisen.

Dabei ist prinzipiell sowohl jede Kombination der genannten Materialien untereinander denkbar als auch eine Kombination eines oder mehrerer der genannten Materialien mit wenigstens einem anderen in der Aufzählung nicht explizit erwähntem Material.

Bei der verdichtbaren Eigenschaft der Füllstoff-Partikel ist es bevorzugt, wenn sich diese von 10 bis zu 99 % ihrer Ausgangsgröße verdichten lassen.

Bei der expandierbaren Eigenschaft der Füllstoff-Partikel ist es bevorzugt, wenn diese von 5 % bis zu wenigstens 200 % ihrer Ausgangsgröße expandieren können.

Bevorzugt umfasst der wenigstens eine Füllstoff wenigstens ein Material, welches ausgewählt ist aus der Gruppe bestehend aus a) Materialien mit porösen Strukturen, wie Kork, Ethylen-Vinyl-Acetat (EVA), Polyurethan-Schaum, Polylactid (PLA), Polyvinylalkohol (PVA), Metalllegierungen, wie Cobalt-Chrom, und b) elastische Materialien durch flexible chemische Bindungen, wie Kautschuk, insbesondere vulkanisierter recycelter Kautschuk, und Materialien mit LnN₆-Einheiten und/oder FeC₆-Einheiten.

Unter "Kork" werden im Rahmen der vorliegenden Erfindung Kork-Materialien verstanden, die aus Bäumen gewonnen werden, wie beispielsweise aus der Rinde der Korkeiche.

Gemäß einer vorteilhaften Ausführungsform der Erfindung umfasst der wenigstens eine Füllstoff wenigstens ein Kork-Material.

Gemäß einer vorteilhaften Ausführungsform der Erfindung umfasst der wenigstens eine Füllstoff ein Gemisch aus Kork und Ethylen-Vinyl-Acetat. Hierunter ist insbesondere zu verstehen, dass die Füllstoff-Partikel beide Materialien im Verschnitt aufweisen.

Gemäß einer vorteilhaften Ausführungsform der Erfindung umfasst der wenigstens eine Füllstoff Kautschukpartikel.

Gemäß einer vorteilhaften Ausführungsform der Erfindung umfasst der wenigstens eine Füllstoff recycelte vulkanisierte Kautschukpartikel, insbesondere Kautschukpartikel enthaltend Dienkautschuk(e), die beispielsweise aus Altreifen oder Mischungsresten stammen, wobei letztere beispielsweise bei der Herstellung von Kautschukmischungen für Fahrzeugreifen anfallen.

Erfindungsgemäß enthält das Dichtmittel 0,2 bis 10 Gew.-% des wenigstens einen expandierbaren und/oder verdichtbaren Füllstoffs.

Gemäß der Erfindung enthält das selbsttätig abdichtende Reifendichtmittel 50 bis 75 Gew.-% wenigstens eines Polyolefins. Hiermit wird ein optimales Fließverhalten bei einer gleichzeitig guten Herstellbarkeit (Prozessierbarkeit) des Dichtmittels erzielt.

Das wenigstens eine Polyolefin weist ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können.

Geeignete Polybutene, auch Polyisobutene genannt, sind beispielsweise unter den Handelsnamen Indopol^{®} Polybutene der Firma INEOS Capital Limited erhältlich. Es ist auch ein Gemisch wenigstens eines Polybutens mit wenigstens einem weiteren Polyolefin denkbar. Die Gesamtmenge an enthaltenen Polyolefinen beträgt in jedem Fall wie oben ausgeführt 50 bis 75 Gew.-%.

Bevorzugt enthält das Reifendichtmittel zudem wenigstens einen Kautschuk.

Die Menge des wenigstens einen Kautschuks beträgt bevorzugt 9 bis 15 Gew.-% bezogen auf die Gesamtmenge an Dichtmittel.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Bevorzugt enthält das Dichtmittel zudem wenigstens einen Klebrigmacher. Bevorzugt beträgt die Menge des wenigstens einen Klebrigmachers 2 bis 3,5 Gew.-%. Wie oben erläutert kann mit der erfindungsgemäßen Zusammensetzung des Dichtmittels im Vergleich zum Stand der Technik eine geringere Menge an Klebrigmachern eingesetzt werden.

Gleichzeitig wird ein optimiertes Fließverhalten bei gleichzeitig guter Klebrigkeit erzielt.

Unter Klebrigmacher wird im Rahmen der vorliegenden Erfindung eine Substanz verstanden, die die Klebrigkeit des Dichtmittels erhöht. Bevorzugt ist der Klebrigmacher wenigstens ein Kohlenwasserstoffharz (kurz Harz), welches ausgewählt ist aus der Gruppe bestehend aus Petroleumharzen, Kohlenteerharzen, Terpenharzen und natürlichen Harzen.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.

Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß einer bevorzugten Ausführungsform der Erfindung weist der wenigstens eine Klebrigmacher kein phenolisches Kohlenwasserstoffharz auf, bzw. basiert der Klebrigmacher bevorzugt nicht auf Phenol als Monomer.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Klebrigmacher um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer besonders bevorzugten Ausführungsform der Erfindung handelt es sich bei dem Klebrigmacher um wenigstens ein Harz, welches wenigstens aus C₅-Monomeren aufgebaut ist und dem Fachmann als sogenanntes C₅-Harz bekannt ist. Hiermit werden besonders gute Eigenschaften des Dichtmittels, insbesondere ein optimiertes Fließverhalten bei gleichzeitig guter Klebrigkeit, erzielt. Die Vorteile zeigen sich insbesondere im Vergleich zu Phenolharzen (phenolischen Harzen) als Klebrigmacher.

Bei den aliphatischen C₅-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die C₅-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Bevorzugt enthält das Dichtmittel zudem wenigstens einen Füllstoff.

Die Menge des wenigstens einen Füllstoffs beträgt bevorzugt 5 bis 14 Gew.-%, besonders bevorzugt 7 bis 9 Gew.-%, bezogen auf die Gesamtmenge an Dichtmittel. Bei dem Füllstoff kann es sich um alle dem Fachmann bekannten Füllstoffe handeln, wie insbesondere Ruß und/oder Kieselsäure.

Gemäß einer bevorzugten Ausführungsform der Erfindung umfasst der Füllstoff in wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Hierbei kann es sich um alle dem Fachmann bekannten Rußtypen handeln, wie insbesondere und bevorzugt ein Ruß des Typs N326.

Bevorzugt basiert das Dichtmittel auf der Vernetzung eines Kautschuks mit einem Vernetzer.

Dem Fachmann ist klar, dass die genannten Bestandteile im vernetzten Dichtmittel zumindest teilweise in chemisch veränderter Form, insbesondere als Derivate, vorliegen.

Bevorzugt enthält das Reifendichtmittel somit wenigstens einen Vernetzer.

Die Menge des wenigstens einen Vernetzers beträgt bevorzugt 0,4 bis 1,2 Gew.-%, besonders bevorzugt 0,4 bis 0,8 Gew.-%, bezogen auf die Gesamtmenge an Dichtmittel.

Gemäß einer bevorzugten Ausführungsform der Erfindung ist der Vernetzer ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Mit den bevorzugten und besonders bevorzugten Vernetzern wird eine extrem schnelle Vernetzung bei relativ niedrigen Temperaturen erzielt. Dies ermöglicht bei der Herstellung des Dichtmittels eine Anwendung von Rezepten mit niedrigen Viskositäten die schnell nach dem Aufbringen des Materials in den Reifen ortsfest sind.

Insbesondere durch die Kombination eines Vernetzers mit einem Vernetzungsinitiator wird ein besonders wirksames, im Pannenfall schnell abdichtendes Reifendichtmittel erhalten.

Gemäß einer besonders vorteilhaften Ausführungsform der Erfindung enthält das Reifendichtmittel wenigstens einen Vernetzungsinitiator, bevorzugt ausgewählt aus der Gruppe enthaltend Bleioxid und andere Metalloxide und peroxidische Verbindungen.

Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Die Menge des wenigstens einen Vernetzungsinitiators beträgt bevorzugt 0,5 bis 1,6 Gew.-%, besonders bevorzugt 0,5 bis 1,2 Gew.-%, bezogen auf die Gesamtmenge an Dichtmittel.

Das Dichtmittel kann ferner weitere Bestandteile enthalten, wie insbesondere Weichmacher, wie z. B. Öl(e), sowie gegebenenfalls weitere Zusatzstoffe, wie z. B. Farbpigmente und/oder Zinkoxid und/oder Schwefel und/oder Glaskugeln.

Gemäß vorteilhafter Ausführungsformen der Erfindung enthält das Dichtmittel folgende Bestandteile in folgenden Mengen:
- 0,2 bis 10 Gew.-% an expandierbaren und/oder verdichtbaren Füllstoffen
- 50 bis 75 Gew.-% wenigstes eines Polyolefins, bevorzugt wenigstens eines Polybutens, und
- 2,0 bis 3,5 Gew.-% wenigstens eines Klebrigmachers und
- 9,0 bis 15 Gew.-% wenigstens eines Kautschuks und
- 5,0 bis 9 Gew.-% wenigstens eines Füllstoffs und
- 0,4 bis 0,8 Gew.-% wenigstens eines Vernetzers und
- 0,5 bis 1,2 Gew.-% wenigstens eines Vernetzungsinitiators.

Die Angaben in Gew.-% beziehen sich jeweils auf die Gesamtmenge an Dichtmittel.

Das erfindungsgemäße Reifendichtmittel kann durch im Stand der Technik bekannte Verfahren hergestellt werden, wobei die expandierbaren und/oder verdichtbaren Füllstoffe in einer möglichen Vorstufe des Dichtmittels eingemischt werden.

Ein weiterer Gegenstand der vorliegenden Erfindung ist ein Fahrzeugluftreifen, der
a) das erfindungsgemäße Reifendichtmittel inklusive aller genannten Ausführungen wenigstens auf der dem Laufstreifen gegenüberliegenden Innenfläche aufweist oder
b) das erfindungsgemäße Reifendichtmittel inklusive aller genannten Ausführungen wenigstens auf der dem Laufstreifen gegenüberliegenden Innenfläche aufweist und dieses Reifendichtmittel radial innen und/oder außen mit wenigstens einem expandierbarem und/oder verdichtbarem Füllstoff beschichtet ist, oder
c) wenigstens ein Reifendichtmittel wenigstens auf der dem Laufstreifen gegenüberliegenden Innenfläche aufweist und dieses Reifendichtmittel radial innen und/oder außen mit wenigstens einem expandierbarem und/oder verdichtbarem Füllstoff beschichtet ist.

Die beschriebenen Füllstoffe können im erfindungsgemäßen Fahrzeugreifen somit sowohl in der Dichtmittelzusammensetzung und/oder dem Dichtmittel benachbarten Schichten enthalten sein.

Der erfindungsgemäße Fahrzeugluftreifen weist somit ein Dichtmittel und expandierbare und/oder verdichtbare Füllstoffe auf. Er zeichnet sich durch eine bessere Luftdichtigkeit im Pannenfall aus.

Beispielsweise kann als Füllstoff ein Gemisch/Verschnitt aus Kork und Ethylen-Vinyl-Acetat eingesetzt werden wie unter dem Handelsnamen TS 2180 der Firma AMORIM CORK COMPOSITES erhältlich.

## Patentansprüche

1. Selbsttätig abdichtendes Reifendichtmittel, wobei es wenigstens einen Füllstoff in Form von Partikeln enthält, die expandierbare und/oder verdichtbare Eigenschaften aufweisen, wobei der Füllstoff wenigstens ein Material umfasst, welches ausgewählt ist aus der Gruppe umfassend a) Materialien mit porösen Strukturen, wie Kork, Ethylen-Vinyl-Acetat (EVA), Polyurethan-Schaum, Polylactid (PLA), Polyvinylalkohol (PVA), Metalllegierungen, wie Cobalt-Chrom, und b) elastische Materialien durch flexible chemische Bindungen, wie Kautschuk, insbesondere recycelter vulkanisierter Kautschuk, und Materialien mit LnN₆-Einheiten und/oder FeC₆-Einheiten, wobei das Reifendichtmittel 50 bis 75 Gew.-% wenigstens eines Polyolefins mit einem Zahlenmittel der Molekulargewichtsverteilung Mn gemäß GPC von 400 bis 2500 g/mol enthält, wobei die Partikelgröße des wenigstens einen Füllstoffs von 10 µm (Mikrometer) bis 10 mm (Millimeter) beträgt und wobei das Reifendichtmittel 0,2 bis 10 Gew.-% des wenigstens einen expandierbaren und/oder verdichtbaren Füllstoffs enthält.

2. Reifendichtmittel nach Anspruch 1, **dadurch gekennzeichnet, dass** die Partikelgröße 0,2 bis 6 mm beträgt.

3. Reifendichtmittel nach einem der vorherigen Ansprüche, **dadurch gekennzeichnet, dass** der wenigstens eine Füllstoff eine Dichte von 40 bis 900 kg/m³ aufweist.

4. Reifendichtmittel nach einem der vorherigen Ansprüche, **dadurch gekennzeichnet, dass** der wenigstens eine Füllstoff ein Gemisch aus Kork und Ethylen-Vinyl-Acetat umfasst.

5. Reifendichtmittel nach einem der vorherigen Ansprüche, **dadurch gekennzeichnet, dass** der wenigstens eine Füllstoff Kautschukpartikel umfasst.

6. Fahrzeugluftreifen, der
a) das Reifendichtmittel nach einem der Ansprüche 1 bis 5 wenigstens auf der dem Laufstreifen gegenüberliegenden Innenfläche aufweist oder
b) das Reifendichtmittel nach einem der Ansprüche 1 bis 5 wenigstens auf der dem Laufstreifen gegenüberliegenden Innenfläche aufweist und dieses Reifendichtmittel radial innen mit wenigstens einem expandierbarem und/oder verdichtbarem Füllstoff beschichtet ist, oder
c) wenigstens ein Reifendichtmittel wenigstens auf der dem Laufstreifen gegenüberliegenden Innenfläche aufweist und dieses Reifendichtmittel radial innen mit wenigstens einem expandierbarem und/oder verdichtbarem Füllstoff beschichtet ist.

## Claims

1. Self-sealing tyre sealant comprising
at least one filler in the form of particles having expandable and/or compressible properties, wherein the filler comprises at least one material selected from the group comprising a) materials with porous structures, such as cork, ethylene-vinyl acetate (EVA), polyurethane foam, polylactide (PLA), polyvinylalcohol (PVA), metal alloys such as cobalt-chromium, and b) elastic materials through flexible chemical bonds, such as rubber, in particular recycled vulcanized rubber, and materials containing LnN₆ units and/or FeC₆ units, wherein the tyre sealant contains 50% to 75% by weight of at least one polyolefin having a number average of the molecular weight distribution Mn by GPC of 400 to 2500 g/mol, wherein the particle size of the at least one filler is 10 µm (micrometres) to 10 mm (millimetres) and wherein the tyre sealant contains 0.2% to 10% by weight of the at least one expandable and/or compressible filler.

2. Tyre sealant according to Claim 1, **characterized in that** the particle size is 0.2 to 6 mm.

3. Tyre sealant according to any of the preceding claims, **characterized in that** the at least one filler has a density of 40 to 900 kg/m³.

4. Tyre sealant according to any of the preceding claims, **characterized in that** the at least one filler comprises a mixture of cork and ethylene-vinyl acetate.

5. Tyre sealant according to any of the preceding claims, **characterized in that** the at least one filler comprises rubber particles.

6. Pneumatic vehicle tyre which
a) includes the tyre sealant according to any of Claims 1 to 5 at least on the inner surface on the opposite side from the tread, or
b) includes the tyre sealant according to any of Claims 1 to 5 at least on the inner surface on the opposite side from the tread and this tyre sealant is coated radially on the inside with at least one expandable and/or compressible filler, or
c) includes at least one tyre sealant at least on the inner surface on the opposite side from the tread and this tyre sealant is coated radially on the inside with at least one expandable and/or compressible filler.

## Revendications

1. Agent d'étanchéité pour pneumatiques autocolmatant qui contient au moins un matériau de remplissage sous forme de particules qui présentent des propriétés expansibles et/ou compactables, dans lequel le matériau de remplissage comprend au moins un matériau qui est sélectionné dans le groupe comprenant a) des matériaux à structures poreuses, comme le liège, l'éthylène-acétate de vinyle (EVA), la mousse de polyuréthane, le polylactide (PLA), l'alcool polyvinylique (PVA), les alliages de métal, comme le cobalt-chrome, et b) des matériaux élastiques par liaisons chimiques flexibles, comme le caoutchouc, en particulier le caoutchouc vulcanisé recyclé, et des matériaux avec des unités LnN₆ et/ou des unités FeC₆, dans lequel l'agent d'étanchéité pour pneumatiques contient de 50 à 75 % en poids d'au moins une polyoléfine avec une moyenne en nombre de la distribution de masse moléculaire Mn selon GPC de 400 à 2500 g/mol, dans lequel la taille des particules dudit au moins un matériau de remplissage est de 10 µm (micromètres) à 10 mm (millimètres), et dans lequel l'agent d'étanchéité pour pneumatiques contient de 0,2 à 10 % en poids dudit au moins un matériau de remplissage expansible et/ou compactable.

2. Agent d'étanchéité pour pneumatiques selon la revendication 1,
**caractérisé en ce que** la taille des particules est de 0,2 à 6 mm.

3. Agent d'étanchéité pour pneumatiques selon l'une quelconque des revendications précédentes, **caractérisé en ce que** ledit au moins un matériau de remplissage présente une densité de 40 à 900 kg/m³.

4. Agent d'étanchéité pour pneumatiques selon l'une quelconque des revendications précédentes, **caractérisé en ce que** ledit au moins un matériau de remplissage comprend un mélange de liège et d'éthylène-acétate de vinyle.

5. Agent d'étanchéité pour pneumatiques selon l'une quelconque des revendications précédentes, **caractérisé en ce que** ledit au moins un matériau de remplissage comprend des particules de caoutchouc.

6. Pneu de véhicule qui
a) présente l'agent d'étanchéité pour pneumatiques selon l'une quelconque des revendications 1 à 5 au moins sur la face intérieure opposée à la bande de roulement, ou
b) présente l'agent d'étanchéité pour pneumatiques selon l'une quelconque des revendications 1 à 5 au moins sur une face intérieure opposée à la bande de roulement, et cet agent d'étanchéité pour pneumatiques est recouvert radialement à l'intérieur d'au moins un matériau de remplissage expansible et/ou compactable, ou
b) présente au moins un agent d'étanchéité pour pneumatiques au moins sur une face intérieure opposée à la bande de roulement, et cet agent d'étanchéité pour pneumatiques est recouvert radialement à l'intérieur d'au moins un matériau de remplissage expansible et/ou compactable.
